# FASCICULE DE BREVET EUROPEEN

(11) **EP 1 019 216 B1**
(45) Date de publication et mention de la délivrance du brevet: **26.02.2003**
(21) Numéro de dépôt: 98945385.7
(22) Date de dépôt: 28.09.1998
(51) Int. Cl.: B23K 7/10

(54) **PROCEDE D'OXYCOUPAGE DE BILLETTES DE COULEE CONTINUE, ET DISPOSITIF DE MISE EN OEUVRE DUDIT PROCEDE**
STRANGBRENNSCHNEIDVERFAHREN UND -VORRICHTUNG
METHOD FOR ACETYLENE CUTTING OF CONTINUOUS CAST BILLETS, AND DEVICE FOR IMPLEMENTING SAID METHOD

(30) Priorité: 01.10.1997 FR 9712210
(43) Date de publication de la demande: 19.07.2000
(73) Titulaire: Donze, Michel, F-54460 Liverdun (FR); Prioretti, Guy, 57100 Thionville (FR)
(72) Inventeur: Donze, Michel, F-54460 Liverdun (FR); Prioretti, Guy, 57100 Thionville (FR)
(74) Mandataire: Jaunez, Xavier
(86) Numéro de dépôt international: FR9802070
(87) Numéro de publication internationale: WO99016570

(56) Documents cités:
- EP-A- 0 639 416
- WO-A-96/20818
- US-A- 2 820 420

## Description

La présente invention concerne un procédé et un dispositif d'oxycoupage de billettes de coulée continue.

Les installations sidérurgiques de coulée continue de billettes comportent en général un dispositif d'oxycoupage servant à débiter les billettes sortant de la coulée en tronçons destinés au relaminage en produits sidérurgiques (ronds, profilés, fils, etc...). Les dispositifs d'oxycoupage utilisent classiquement un chariot déplaçable horizontalement sur des rails associés en surplombant la billette à couper. Le chariot présente intérieurement une pince servant à agripper la billette en déplacement, et, en avant du chariot, un porte-chalumeau avec son chalumeau, capable d'être mis en mouvement pendulaire dans un plan vertical grâce à des moyens d'entraînement associés. Le chariot mobile est motorisé, et la motorisation est débrayée lorsque la pince est actionnée, car le chariot est alors entraîné directement par la billette en déplacement. Le chalumeau pendulaire est alors mis en action, et réalise la coupe par oxycoupage, le jet d'oxygène de coupe attaquant la billette de part et d'autre de la verticale par la face supérieure de celle-ci. Ainsi, lors du mouvement de translation du chariot identique à celui de la billette pendant le temps de tronçonnage, la coupe de la billette est réalisée par le mouvement pendulaire du chalumeau d'oxycoupage dans un plan vertical. Une fois la coupe réalisée, le chariot est remis en mouvement vers l'arrière, puis la pince est à nouveau actionnée pour agripper la billette du côté amont, afin de procéder à une nouvelle coupe de celle-ci. Le document EP-A-0 639 416 décrit une installation d'oxycoupage à deux lignes, dont chacune comporte un chariot mobile à chalumeau pendulaire du type précité.

Ce type de technique d'oxycoupage de billettes de coulée continue présente trois inconvénients majeurs.

Le premier inconvénient réside dans la formation de résidus de métal fondu sur la face inférieure de la billette, au niveau de la sortie du jet d'oxycoupage, et ce sur toute la largeur de la billette. Ce bourrelet de résidus de métal fondu mélangés à de l'oxyde de fer restant solidement fixé aux extrémités oxycoupées forme un cordon de coupe qui est bien entendu indésirable. Il s'avère de ce fait nécessaire de prévoir une opération supplémentaire d'enlèvement de ces résidus ou cordons plus ou moins importants suivant les nuances d'acier ou les types et les réglages de chalumeau. Cet enlèvement est généralement effectué par ébavurage, en général au chalumeau. Il s'agit d'une opération de reprise qui implique un coût pénalisant le prix de revient de la production des billettes.

Le deuxième inconvénient réside dans une utilisation défavorable du jet d'oxycoupage, qui est la conséquence directe du mouvement géométrique du chalumeau selon une trajectoire d'arc de cercle dans un plan vertical lors du mouvement pendulaire du porte-chalumeau. En effet, la vitesse du jet est plus importante au niveau de la face inférieure de la billette que la vitesse du jet sur la surface d'attaque supérieure de ladite billette, ce qui est défavorable sur le plan énergétique dans la mesure où l'oxygène de coupe est moins énergique au bord aval de la coupe du fait de la perte de son énergie cinétique. Or, l'épaisseur du cordon de coupe est fonction de la vitesse du jet d'oxycoupage, de sorte que ce cordon est automatiquement très épais si l'on souhaite effectuer une coupe rapide de la billette.

On peut enfin citer un troisième inconvénient qui est la non prise en compte du vrillage accidentel de la billette (au refroidissement pour certains aciers), lequel vrillage induit une imprécision de la coupe et la présence de résidus nécessairement plus importants au niveau des zones plus vrillées de la billette.

L'arrière-plan technologique est également illustré par le document US-A-2 820 420 décrivant un chalumeau d'oxycoupage monté en porte-à-faux sur un chariot déplaçable horizontalement, et par le document WO-A-96/20818 décrivant un pont roulant supportant un bras de travail vertical extensible télescopiquement.

L'invention vise à concevoir une technique d'oxycoupage permettant d'éviter les inconvénients précités.

L'invention a ainsi pour objet un procédé d'oxy-coupage de billettes de coulée continue et un dispositif de mise en oeuvre de ce procédé, qui soient capables d'effectuer une coupe régulière des billettes sans présence de cordon de coupe, et ce avec une précision et une rapidité élevées, même en cas de vrillage accidentel des billettes.

Ce problème est résolu conformément à l'invention grâce à un procédé d'oxycoupage de billettes de coulée continue, caractérisé en ce qu'on positionne par rapport à la billette à couper un organe de coupe et un organe d'ébavurage au moyen d'une prise de référence directe sur la billette, puis on descend l'organe de coupe et l'organe d'ébavurage parallèlement aux faces latérales de la billette de façon à effectuer progressivement une coupe du haut vers le bas par une attaque horizontale ou sensiblement horizontale d'une face latérale de la billette, et un ébavurage simultané du cordon de coupe se formant sur l'autre face latérale par une attaque de cette autre face latérale constamment dirigée vers le bas.

Ainsi, grâce à la prise de référence directe sur la billette, on est assuré d'effectuer une coupe précise qui attaque une face latérale de la billette dans une direction exactement perpendiculaire à celle-ci, et ce même si ladite billette est vrillée. En effet, en cas de vrillage, la direction d'attaque est automatiquement corrigée. On parvient ainsi à réaliser une véritable coupe "horizontale" avec une précision et une rapidité optimales.

De préférence, la prise de référence directe est réalisée sur les deux faces latérales de la billette, par exemple au moyen d'une pince mobile. Lorsque la pince mobile a contacté les deux faces latérales de la billette, la direction de descente de l'organe de coupe et de l'organe d'ébavurage est parfaitement déterminée, et l'on est tout-à-fait certain que cette direction est bien parallèle aux faces latérales de la billette.

Avantageusement encore, la prise de référence est effectuée par la descente rapide d'une pince mobile, après quoi la coupe et l'ébavurage du haut vers le bas sont effectués par la descente à vitesse d'oxycoupage programmée des organes correspondants. Le processus d'oxycoupage est ainsi optimisé, avec une perte de temps minimale pour la mise en place des organes de coupe et d'ébavurage.

De préférence encore l'organe d'ébavurage est une busette de chalumeau, dont le jet reste constamment dirigé vers le bas lors de la descente des organes de coupe et d'ébavurage.

Ainsi, l'ébavurage simultané réalisé par une attaque constamment dirigée vers le bas, en particulier un jet de busette, réalise une évacuation vers le bas des fumées, ce qui est favorable pour l'évacuation normale des fumées, et de plus cela évite la création de projections latérales de scories que l'on obtenait classiquement avec les installations à chalumeaux déplacés selon un mouvement pendulaire. On est ainsi parvenu à réaliser pour la première fois une coupe horizontale exempte de cordons de coupe et avec un ébavurage organisé vers le bas.

L'invention concerne également un dispositif de mise en oeuvre du procédé d'oxycoupage précité, le dispositif étant du type comportant un chariot déplaçable horizontalement sur des rails associés en surplombant la billette à couper.

Conformément à l'invention, le dispositif comporte en outre :
- un châssis annexe relié au chariot mobile et supportant un actionneur vertical ;
- un bâti suspendu à l'actionneur vertical par l'intermédiaire d'un joint de cardan, ledit bâti supportant d'une part une pince mobile et d'autre part un organe de coupe et un organe d'ébavurage mobiles dans une direction verticale ou sensiblement verticale déterminée par la pince mobile après serrage de la billette à couper, ledit organe de coupe agissant dans une direction sensiblement horizontale essentiellement perpendiculaire à la direction de déplacement précitée, et ledit organe d'ébavurage agissant vers le bas.

Grâce à la présence du joint de cardan, il est possible de déplacer les organes de coupe et d'ébavurage selon une direction inclinée par rapport à la verticale, laquelle direction est automatiquement donnée par suite de la prise de référence réalisée au moyen de la pince mobile.

De préférence, l'actionneur vertical est un vérin ou un moteur électrique, dont le corps est monté flottant sur le châssis annexe, en pouvant au moins pivoter autour d'un axe horizontal parallèle à la direction de déplacement du chariot. On évite ainsi tout risque de coincement de l'ensemble qui est déplacé dans un plan vertical pour la coupe horizontale de la billette.

Selon un mode d'exécution particulier, le châssis annexe est monté frontalement par une extrémité sur le chariot en pouvant pivoter autour d'un axe horizontal, et il repose par son autre extrémité sur les mêmes rails que ledit chariot.

En variante, on pourra prévoir que le châssis annexe est monté latéralement sur les axes de roulement du chariot, et se prolonge frontalement par une partie en porte-à-faux supportant l'actionneur vertical.

Le mode de liaison des organes de coupe et l'organe d'ébavurage au bâti pourra être réalisé de différentes façons, dès lors que la direction de coulissement des organes de coupe et d'ébavurage respecte la direction donnée par la prise de référence réalisée au moyen de la pince mobile.

On pourra ainsi prévoir que l'organe de coupe et l'organe d'ébavurage sont reliés à un coulisseau central traversant le bâti, et que la pince mobile est articulée sur ledit bâti.

En variante, on pourra prévoir que l'organe de coupe et l'organe d'ébavurage sont reliés au bâti, et que la pince mobile est articulée sur un châssis secondaire pouvant coulisser verticalement sur ledit bâti. Selon le cas, le châssis secondaire pourra être relié au bâti par un vérin de descente de pince.

De préférence, l'organe de coupe comporte un brûleur horizontal à bloc de tuyère incorporé. Avantageusement alors, le bloc de tuyère avec sa canalisation d'alimentation en oxygène de coupe forme un ensemble amovible.

Avantageusement encore, l'organe d'ébavurage est une busette alimentée en oxygène, et montée de façon que son jet soit dirigé vers le bas. De préférence alors, la busette d'ébavurage est alimentée par l'oxygène de coupe ou l'oxygène de chauffe alimentant l'organe de coupe, via une dérivation associée.

D'autres caractéristiques et avantages de l'invention apparaîtront plus clairement à la lumière de la description qui va suivre et des dessins annexés, concernant un mode de réalisation particulier, en référence aux figures où :

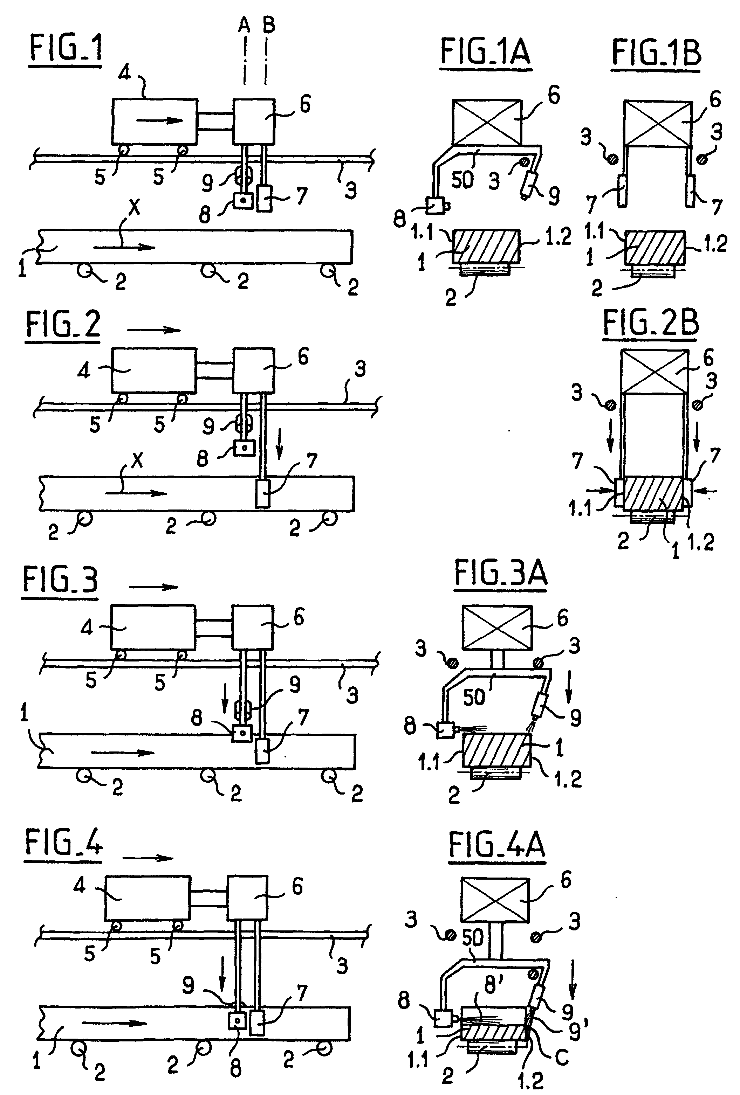

- les figures 1 à 4 illustrent schématiquement un procédé d'oxycoupage de billettes de coulée continue conforme à l'invention avec, pour la vue en élévation de la figure 1 et les vues en coupe des figures 1A et 1B (respectivement selon les plans A et B de la figure 1), la mise en place du dispositif d'oxycoupage au-dessus de la billette à couper, puis pour les figures 2 et 2B la phase de prise de référence au moyen d'une pince mobile enserrant la billette, puis pour les figures 3 et 3A la descente des organes de coupe et d'ébavurage de façon à arriver au niveau de la face supérieure de la billette à couper, et enfin pour les figures 4 et 4A le processus de coupe à un niveau intermédiaire de la billette, cette coupe et l'ébavurage simultané se poursuivant du haut vers le bas sur toute l'épaisseur de la billette ;
- la figure 5 illustre en élévation un dispositif de mise en oeuvre du procédé selon l'invention, avec un châssis annexe oscillant monté en brouette, et
- la figure 6 illustre le même dispositif vu en bout ;
- la figure 7 est une vue analogue à celle de la figure 6, mais simplifiée, illustrant une prise de référence sur une billette vrillée, ce qui induit une inclinaison de la direction de coulissement des organes de coupe et d'ébavurage ;
- les figures 8 et 9 sont deux vues illustrant le bâti supportant la pince mobile et les organes de coupe et d'ébavurage, conformément à un système à coulisseau central;
- les figures 10 et 11 sont deux vues analogues aux précédentes, illustrant une variante utilisant un châssis secondaire pouvant coulisser verticalement sur le bâti ;
- les figures 12 et 13 illustrent une variante de réalisation, avec un châssis annexe monté latéralement sur les axes de roulement du chariot, de chaque côté de celui-ci ;
- la figure 14 est une vue partielle en perspective illustrant plus en détail les organes de coupe et d'ébavurage, avec un ensemble fonctionnel amovible comportant le bloc de tuyère d'oxycoupage avec sa canalisation d'alimentation en oxygène de coupe, la busette d'ébavurage étant en l'espèce également alimentée en oxygène par une dérivation de cette canalisation.

La figure 1 illustre une billette de coulée continue 1 se déplaçant horizontalement selon une direction notée X par appui sur des rouleaux 2. Une paire de rails horizontaux 3 est agencée en surplomb de la billette en déplacement, servant de support à un chariot mobile 4 qui repose sur les rails 3 par des galets associés 5. Le chariot 4 comporte un châssis 6 équipé intérieurement d'une pince mobile 7, et, dans un plan vertical décalé par rapport à celui de la pince mobile 7 (ici en arrière de ce plan) un organe de coupe 8 et un organe d'ébavurage 9. Les figures 1A et 1B sont des vues en coupe au niveau des plans verticaux notés A et B de la figure 1. Sur la figure 1B, on distingue ainsi les deux éléments ou bras de la pince mobile 7, destinés à contacter les faces latérales 1.1 et 1.2 de la billette 1 pour une prise de référence préliminaire. Sur la figure 1A, on distingue l'ensemble de l'organe de coupe 8 et de l'organe d'ébavurage 9 portés par un support commun 50. Sur les figures 1B et 1A, la pince mobile 7 d'une part et l'organe de coupe 8 et d'ébavurage 9 d'autre part sont en position haute.

Les figures 2 et 2B illustrent la descente de la pince mobile (schématisée par des flèches), dont les extrémités viennent enserrer latéralement la billette 1, ici par un contact direct contre les faces latérales 1.1 et 1.2 de celle-ci. L'équipage comportant l'organe de coupe 8 et l'organe d'ébavurage 9 est quant à lui encore en position haute. L'ensemble roulant sur les rails 3 est alors agrippé à la billette 1 en déplacement par suite de la fermeture de la pince 7, ladite billette entraînant directement cet ensemble roulant. Il est important de noter qu'en cas de vrillage accidentel de la billette, les faces latérales 1.1 et 1.2 sont légèrement inclinées par rapport à la verticale, ce qui induit alors automatiquement une inclinaison correspondante de l'équipage constitué de l'organe de coupe 8 et de l'organe d'ébavurage 9, de sorte que la descente de cet équipage s'effectue toujours parallèlement aux faces latérales de la billette à couper.

Sur les figures 3 et 3A, on a procédé au début de la descente de l'équipage constitué de l'organe de coupe 8 et de l'organe d'ébavurage 9, et l'organe de coupe 8 commence son action de coupe tandis que l'organe d'ébavurage 9 attaque en même temps la face latérale opposée 1.2 pour supprimer le cordon de coupe ou les résidus en formation sur cette dernière face. L'oxycoupage de la billette 1 se poursuit alors avec la descente progressive des organes de coupe 8 et d'ébavurage 9, du haut vers le bas.

Les figures 4 et 4A illustrent ainsi une position intermédiaire, et l'on distingue sur la figure 4A le jet de coupe 8' provenant de l'organe de coupe 8, lequel jet est horizontal ou sensiblement horizontal. On distingue également le jet d'ébavurage 9' provenant de l'organe d'ébavurage 9 qui est par exemple une busette de chalumeau, lequel jet est dirigé vers le bas (de préférence avec une faible inclinaison par rapport à la verticale). L'action du jet d'ébavurage 9' permet non seulement de supprimer le cordon de coupe, mais exerce en plus une action extrêmement favorable en dirigeant les fumées vers le bas tout en évitant les projections latérales de scories. La descente de l'organe de coupe 8 et de l'organe d'ébavurage 9 peut ainsi se poursuivre jusqu'à ce que la billette soit coupée sur toute son épaisseur. Ensuite, il suffit de desserrer la pince 7, et de remonter ladite pince ainsi que les organes de coupe et d'ébavurage. Le chariot 4 peut alors être remis en mouvement pour être ramené vers l'arrière dans une nouvelle position de coupe, et le cycle d'oxycoupage de la billette peut alors recommencer.

Ainsi, conformément aux figures 2 et 2B, on positionne par rapport à la billette à couper 1 l'organe de coupe 8 et l'organe d'ébavurage 9 au moyen d'une prise de référence directe sur la billette (ici réalisée sur les deux faces latérales 1.1 et 1.2 de celle-ci), au moyen de la pince mobile 7, puis on descend l'organe de coupe 8 et l'organe d'ébavurage 9 parallèlement aux faces latérales 1.1 et 1.2 de la billette de façon à effectuer progressivement une coupe du haut vers le bas par une attaque horizontale ou sensiblement horizontale d'une face latérale 1.1 de la billette, et un ébavurage simultané du cordon de coupe noté C se formant sur l'autre face latérale 1.2 par une attaque de cette autre face latérale constamment dirigée vers le bas.

Pour optimiser la phase d'oxycoupage en diminuant le temps du processus, on pourra prévoir que la prise de référence est effectuée par une descente rapide de la pince mobile 7, après quoi la coupe et l'ébavurage du haut vers le bas peuvent être effectués par une descente à vitesse d'oxycoupage programmée des organes correspondants 8, 9. De préférence, l'organe d'ébavurage 9 est une busette de chalumeau, dont le jet 9' reste constamment dirigé vers le bas lors de la descente des organes de coupe et d'ébavurage 8, 9.

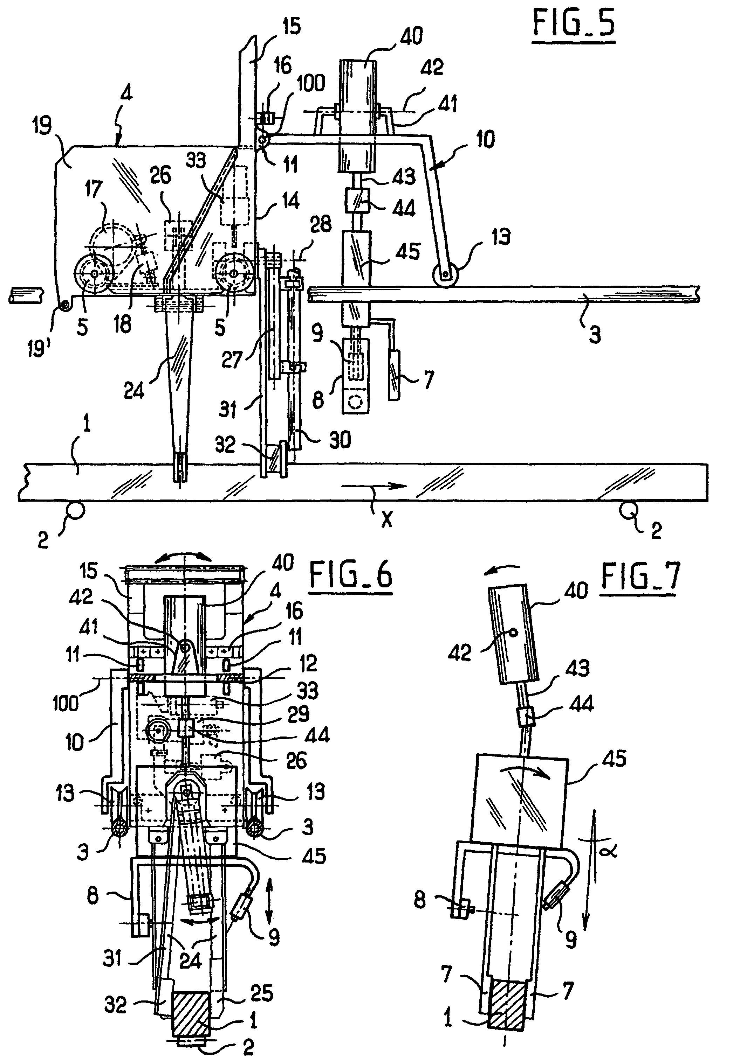

Les figures 5 et 6 illustrent un dispositif de mise en oeuvre du procédé d'oxycoupage qui vient d'être décrit.

Sur ces représentations plus détaillées, on reconnaît le chariot mobile 4 qui est quant à lui de conception classique (on décrira plus loin les équipements qui lui sont propres). Conformément à une caractéristique de l'invention, ce chariot 4 est équipé d'un châssis annexe 10 qui lui est relié, et qui supporte un actionneur 40. En l'espèce, le châssis annexe 10 est monté frontalement par une extrémité sur le chariot 4 au niveau d'oreilles 11, en pouvant pivoter autour d'un axe horizontal 100. A son autre extrémité, le châssis annexe 10 repose sur les mêmes rails 3 que ceux du chariot, par des galets associés 13. Le châssis annexe 10 présente un panneau central 12 présentant deux consoles 41 qui supportent l'actionneur vertical 40 en vue d'un montage flottant de celui-ci. En l'espèce, on a illustré un montage oscillant autour d'un axe horizontal 42 passant sensiblement par le plan vertical médian du chariot. L'actionneur vertical 40 pourra être un vérin ou un moteur électrique, dont le corps est ainsi monté flottant sur le châssis annexe 10. L'actionneur vertical 40 traverse le panneau central 12, et il est équipé intérieurement d'une tige de sortie 43 munie d'un joint de cardan intermédiaire 44. Un bâti 45 est suspendu à l'actionneur vertical 40 par cette tige de sortie 43, ledit bâti supportant d'une part la pince mobile 7 et d'autre part l'organe de coupe 8 et l'organe d'ébavurage 9 qui sont mobiles dans une direction verticale ou sensiblement verticale déterminée par la pince mobile 7 après serrage de la billette à couper. L'organe de coupe 8 peut alors agir dans une direction sensiblement horizontale qui est essentiellement perpendiculaire à la direction de déplacement précitée, tandis que l'organe d'ébavurage 9 agit quant à lui constamment vers le bas. La descente des organes de coupe 8 et d'ébavurage 9 est déterminée avec une très grande précision grâce à la double prise de référence : d'une part la référence d'altitude qui est donnée par l'appui direct des galets 13 sur les rails de roulement 3, et d'autre part la référence angulaire donnée par le contact des faces latérales de la billette par les deux mâchoires de la pince mobile 7.

La figure 7 illustre la position des organes précités en cas de vrillage accidentel de la billette 1 (petit angle a par rapport à la verticale). Comme on peut le constater, le montage flottant de l'actionneur vertical 40 et la présence du joint de cardan intermédiaire 44 permettent de réaliser la descente normale dans la direction souhaitée de l'équipage constitué de l'organe de coupe 8 et de l'organe d'ébavurage 9. On réalise ainsi un oxycoupage extrêmement précis dans la mesure où la direction d'attaque du jet de coupe et du jet d'ébavurage restent toujours les mêmes par rapport aux faces latérales de la billette, et ce tout au long de la coupe effectuée du haut vers le bas, qu'il y ait ou non vrillage accidentel de la billette à couper.

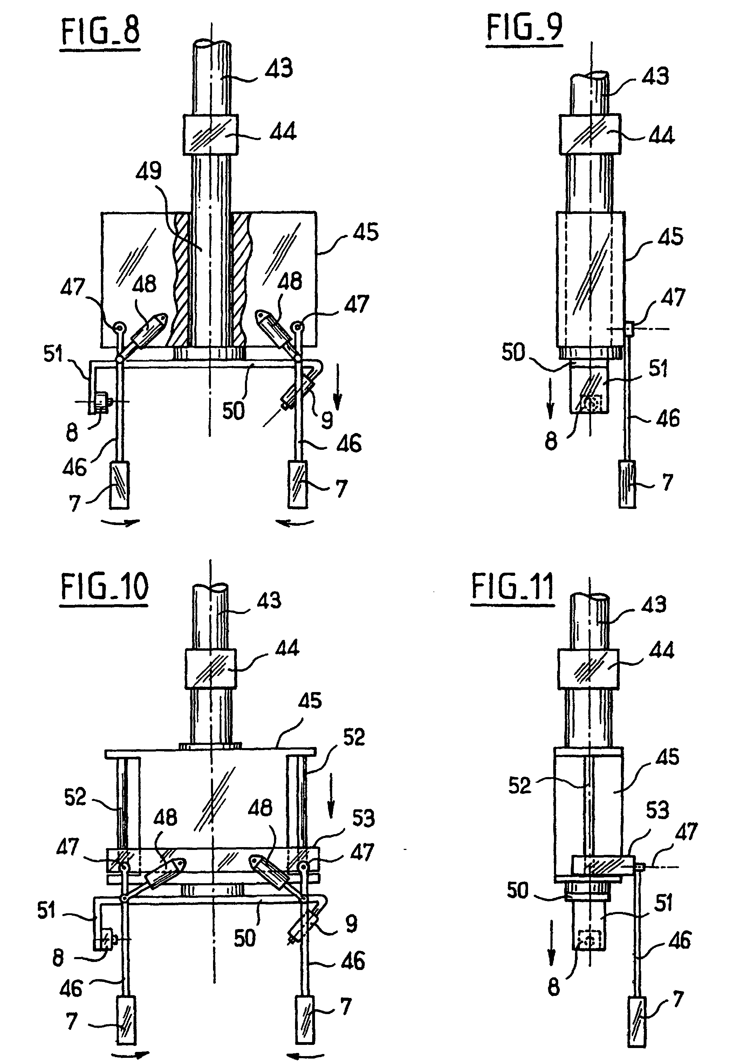

Un premier type de montage de la pince mobile 7 et des organes de coupe 8 et d'ébavurage 9 par rapport au bâti 45 est illustré aux figures 8 et 9.

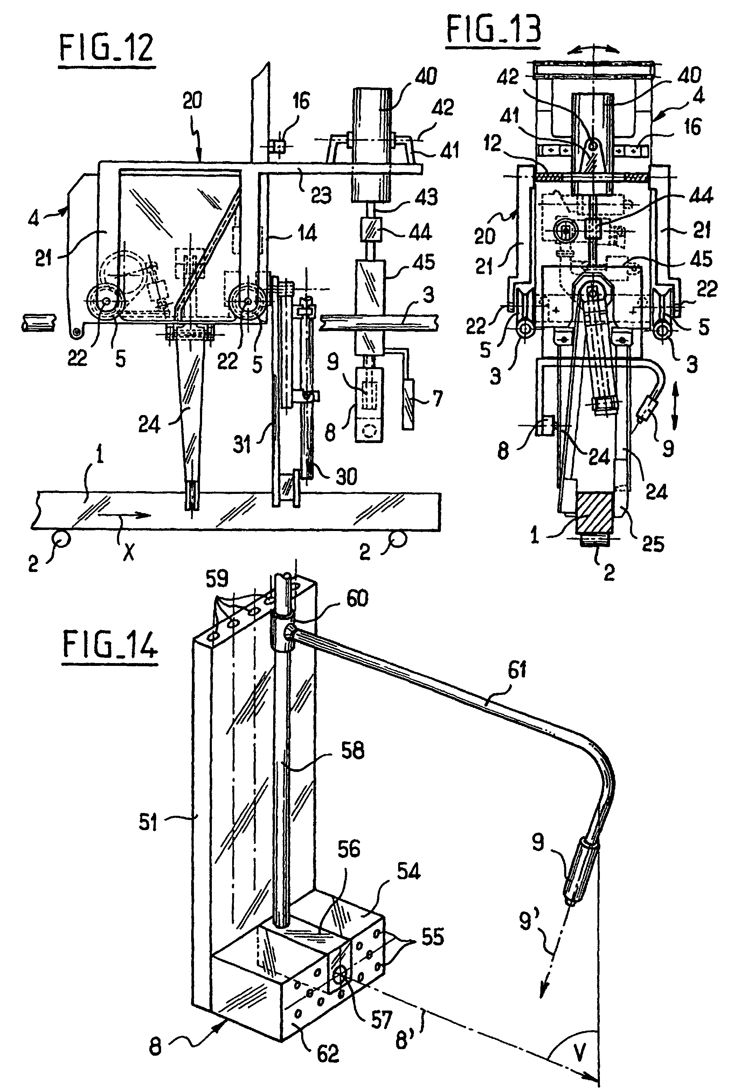

Selon ce montage, l'organe de coupe 8 et l'organe d'ébavurage 9 sont fixés sur un support commun 50 solidaire d'un coulisseau central 49 traversant le bâti 45, sensiblement au centre de celui-ci, le coulisseau 49 étant raccordé au joint de cardan 44. Les deux bras 46 de la pince mobile 7 sont quant à eux articulés en 47 directement sur le bâti 45, et leur mouvement est déterminé par des vérins de commande associés 48. On a noté 51 le bloc distributeur supportant l'organe de coupe 8, lequel bloc sera décrit plus en détail plus loin en référence à la figure 14. Avec ce montage, la mise en action de l'actionneur vertical 40 a pour effet de descendre le bâti 45 avec les éléments qu'il supporte jusqu'à ce que la prise de référence par les extrémités de la pince mobile 7 soit réalisée. Après cette prise de référence par serrage des deux faces latérales de la billette, le bâti 45 cesse de descendre, et c'est le coulisseau 49 qui descend alors seul avec les organes de coupe 8 et d'ébavurage 9 pour réaliser le processus de coupe de la billette.

Les figures 10 et 11 illustrent une autre variante possible, selon laquelle l'organe de coupe 8 et l'organe d'ébavurage 9 sont reliés au bâti 45 par un support 50 rigidement solidaire de ce dernier, tandis que la pince mobile 7 est articulée sur un châssis secondaire noté 53 pouvant coulisser verticalement sur ledit bâti. Le bâti 45 comporte à cet effet deux colonnettes verticales 52 agencées latéralement de part et d'autre du bâti, lesdites colonnettes servant de guide pour le mouvement de coulissement du châssis secondaire 53 en forme de U (dans un plan horizontal) et les bras 46 de la pince mobile 7 sont articulés en 47 sur ce châssis mobile 53, avec des vérins d'actionnement associés 48 organisant le mouvement des bras pour la prise de référence préliminaire, ou le dégagement final après achèvement du processus de coupe.

Avec ce montage, l'ensemble suspendu au joint de cardan 44 est descendu progressivement jusqu'à la prise de référence par la pince mobile 7, après quoi, le châssis 45 et les organes de coupe 8 et d'ébavurage 9 descendent plus bas, le châssis secondaire 53 restant alors immobile en surplomb de la billette à couper.
Avec ce mode d'exécution, on pourra alors réaliser une commande entièrement électrique au moyen de l'actionneur 40, mettant en oeuvre d'une part la phase d'approche préliminaire pour la prise de référence par enserrage de la billette à couper, et d'autre part le processus d'oxycoupage avec la vitesse de coupe programmée à l'avance.

On pourra en variante prévoir que le châssis secondaire 53 est relié au bâti 45 par un vérin de descente de pince (non représenté ici). Dans ce cas, pour la phase d'approche préliminaire, le vérin de descente de pince est seul actionné, le bâti 45 restant alors immobile. Ensuite, le bâti 45 et les organes de coupe 8 et d'ébavurage 9 sont descendus pour le processus de coupe proprement dit.

Les figures 12 et 13 illustrent une variante qui peut être envisagée si l'on dispose d'un encombrement latéral suffisant de part et d'autre du chariot mobile 4.

Dans ce cas, on a prévu que le châssis annexe noté 20 est monté latéralement sur les axes de roulement 22 du chariot 4, ledit châssis annexe se prolongeant frontalement par une partie en porte-à-faux notée 23 qui supporte l'actionneur 40, les organes portés par la partie en porte-à-faux étant identiques au mode de réalisation précédent. On n'a donc plus la référence par l'appui direct d'un châssis brouette comme précédemment décrit par appui sur les rails de roulement, mais un montage direct sur les axes de roulement du chariot. Un tel montage peut être plus simple, mais il présente l'inconvénient d'un porte-à-faux important nécessitant un équilibrage correct de l'équipage déplaçable sur les rails.

La figure 14 illustre un mode de réalisation avantageux des organes de coupe 8 et d'ébavurage 9.

L'organe de coupe 8 comporte un brûleur horizontal 54 monté en porte-à-faux sur un bloc distributeur 51 qui est accroché au support 50 précité qui est suspendu à l'actionneur 40. Le bloc de distribution 51 est de préférence réalisé en acier inox, et il est percé d'une pluralité de canaux verticaux 59 usinés dans sa masse, afin d'amener l'oxygène de chauffe, le gaz de chauffe, et le circuit aller-et-retour de l'eau de refroidissement. Le brûleur horizontal 54 présente des conduits non représentés ici permettant l'amenée de ces différents fluides gazeux ainsi que le refroidissement par circulation d'eau. Le brûleur horizontal 54 est ici équipé d'un bloc de tuyère incorporé 56. Du côté de la face de sortie 62, on distingue l'orifice 57 de sortie de la tuyère d'oxycoupage, ainsi qu'un certain nombres d'orifices 55 de sortie d'oxygène de chauffe et de gaz de chauffe, entourant l'orifice de sortie de la tuyère. Le bloc porte-tuyère 56 est alimenté en oxygène de coupe par une canalisation 58 qui est ici séparée (c'est-à-dire disjointe du bloc de distribution 51), de façon que la canalisation 58 et le bloc de tuyère 56 forment un ensemble amovible. Il est ainsi possible de remplacer très rapidement l'ensemble représentant le coeur du dispositif d'oxycoupage.

L'organe d'ébavurage 9 est quant à lui constitué par une busette alimentée en oxygène, et monté de façon que son jet 9' soit dirigé vers le bas. On notera que le jet 8' d'oxycoupage et le jet 9' d'ébavurage sont dans un même plan vertical V, et ceci reste vrai pendant tout le processus d'oxycoupage de la billette. La busette d'ébavurage 9 peut être alimentée par l'oxygène de coupe ou l'oxygène de chauffe alimentant l'organe de coupe 8. En l'espèce, on a prévu une alimentation par l'oxygène de coupe, grâce à une dérivation associée 61 qui est piquée sur un organe de raccordement 60 monté sur la canalisation 58 d'alimentation en oxygène de coupe. On pourra en variante prévoir un piquage sur la canalisation d'alimentation en oxygène de chauffe, sur le bloc distributeur 51, auquel cas il conviendra de prévoir un robinet de réglage. On pourra naturellement prévoir une alimentation séparée de la busette d'ébavurage 9, ce qui permet d'avoir plus de souplesse pour l'installation concernée, et ce d'autant plus que la facilité de positionnement de la busette d'ébavurage favorise une diminution des besoins de quantité d'oxygène d'ébavurage.

Un autre avantage de l'invention réside dans le fait que le dispositif qui vient d'être décrit peut parfaitement être intégré à un chariot d'oxycoupage traditionnel, comme cela a été illustré aux figures 5, 6 et 12, 13.

En effet, le chariot 4 est ainsi équipé de façon classique d'une pince 24 servant à agripper la billette 1 par des sabots 25, les bras de la pince étant actionnés par un vérin associé 26. On distingue également un système d'entraînement 17 qui peut être amené en prise par un vérin 18 avec l'un des galets 5 de roulement, de façon à motoriser le déplacement du chariot 4 sur les rails 3. Enfin, le chariot 4 présente frontalement, outre un bras 31 se terminant par un palpeur 32 servant à positionner le départ du cycle de coupe, un support oscillant 27 monté pour un déplacement pendulaire autour d'un axe horizontal central 28 par la commande d'un actionneur associé 33, le support 27 étant équipé d'un chalumeau pendulaire 30 de type traditionnel. On distingue également le vérin 29 servant à actionner le palpeur 32 avant le départ d'un cycle de coupe. Le chariot 4 est en outre équipé d'un capot 19 capable de pivoter sur un axe arrière 19', et un support 15 de flexibles équipé d'un râtelier 16 d'accrochage des flexibles d'amenée (non représentés ici). Les figures montrent que le dispositif selon l'invention est agencé en avant du chalumeau pendulaire 30, ce qui permet de compléter une installation existante, sans procéder à un quelconque démontage. De plus, en cas de besoin, on peut passer immédiatement par un jeu d'électrovannes associées à une coupe réalisée par le chalumeau pendulaire, en arrêtant le système d'oxycoupage horizontal : ceci permet d'éviter l'arrêt d'une ligne de coulée continue. On pourra en variante prévoir aussi un montage du dispositif selon l'invention entre le système de pince 24 et le chalumeau pendulaire 30. Un tel montage, sans doute plus complexe à mettre en oeuvre, permet de limiter l'encombrement frontal du chariot, si cela est critique dans l'environnement concerné.

On est ainsi parvenu à réaliser une technique d'oxycoupage de billettes de coulée continue qui est à la fois précise et rapide, tout en réalisant une coupe exempte de cordon, et ce sans se soucier d'un possible vrillage accidentel de la billette à couper. De plus, le dispositif de mise en oeuvre est robuste et fiable dans un environnement hostile, et il permet de changer très rapidement de tuyère sans interrompre la production de la ligne.

L'invention n'est pas limitée aux modes de réalisation qui viennent d'être décrits, mais englobe au contraire toute variante couverte par les revendications.

## Revendications

1. Procédé d'oxycoupage de billettes de coulée continue, **caractérisé en ce qu'**on positionne par rapport à la billette à couper (1) un organe de coupe (8) et un organe d'ébavurage (9) au moyen d'une prise de référence directe sur la billette, puis on descend l'organe de coupe (8) et l'organe d'ébavurage (9) parallèlement aux faces latérales (1.1, 1.2) de la billette de façon à effectuer progressivement une coupe du haut vers le bas par une attaque horizontale ou sensiblement horizontale d'une face latérale (1.1) de la billette, et un ébavurage simultané du cordon de coupe (C) se formant sur l'autre face latérale (1.2) par une attaque de cette autre face latérale constamment dirigée vers le bas.

2. Procédé selon la revendication 1, **caractérisé en ce que** la prise de référence directe est réalisée sur les deux faces latérales (1.1, 1.2) de la billette, de préférence au moyen d'une pince mobile (7).

3. Procédé selon la revendication 2, **caractérisé en ce que** la prise de référence est effectuée par la descente rapide d'une pince mobile (7), après quoi la coupe et l'ébavurage du haut vers le bas sont effectués par la descente à vitesse d'oxycoupage programmée des organes correspondants (8, 9).

4. Procédé selon l'une des revendications 1 à 3, **caractérisé en ce que** l'organe d'ébavurage (9) est une busette de chalumeau, dont le jet reste constamment dirigé vers le bas lors de la descente des organes de coupe et d'ébavurage (8, 9).

5. Dispositif de mise en oeuvre du procédé d'oxycoupage selon l'une des revendications 1 à 4, du type comportant un chariot (4) déplaçable horizontalement sur des rails associés (3) en surplombant la billette (1) à couper, **caractérisé en ce qu'**il comporte en outre :
- un châssis annexe (10, 20) relié au chariot mobile (4) et supportant un actionneur vertical (40) ;
- un bâti (45) suspendu à l'actionneur vertical (40) par l'intermédiaire d'un joint de cardan (44), ledit bâti supportant d'une part une pince mobile (7) et d'autre part un organe de coupe (8) et un organe d'ébavurage (9) mobiles dans une direction verticale ou sensiblement verticale déterminée par la pince mobile (7) après serrage de la billette à couper, ledit organe de coupe (8) agissant dans une direction sensiblement horizontale essentiellement perpendiculaire à la direction de déplacement précitée, et ledit organe d'ébavurage (9) agissant vers le bas.

6. Dispositif selon la revendication 5, **caractérisé en ce que** l'actionneur vertical (40) est un vérin ou un moteur électrique, dont le corps est monté flottant sur le châssis annexe (10, 20), en pouvant au moins pivoter autour d'un axe horizontal (42) parallèle à la direction de déplacement du chariot.

7. Dispositif selon la revendication 5, **caractérisé en ce que** le châssis annexe (10) est monté frontalement par une extrémité sur le chariot (4) en pouvant pivoter autour d'un axe horizontal (100), et il repose par son autre extrémité sur les mêmes rails que ledit chariot.

8. Dispositif selon la revendication 5, **caractérisé en ce que** le châssis annexe (20) est monté latéralement sur les axes de roulement (22) du chariot (4), et se prolonge frontalement par une partie en porte-à-faux (23) supportant l'actionneur vertical (40).

9. Dispositif selon l'une des revendications 5 à 8, **caractérisé en ce que** l'organe de coupe (8) et l'organe d'ébavurage (9) sont reliés à un coulisseau central (49) traversant le bâti (45), et la pince mobile (7) est articulée sur ledit bâti.

10. Dispositif selon l'une des revendications 5 à 8, **caractérisé en ce que** l'organe de coupe (8) et l'organe d'ébavurage (9) sont reliés au bâti (45), et la pince mobile (7) est articulée sur un châssis secondaire (53) pouvant coulisser verticalement sur ledit bâti.

11. Dispositif selon la revendication 10, **caractérisé en ce que** le châssis secondaire (53) est relié au bâti (45) par un vérin de descente de pince.

12. Dispositif selon l'une des revendications 5 à 11, **caractérisé en ce que** l'organe de coupe (8) comporte un brûleur horizontal (54) à bloc de tuyère incorporé (56).

13. Dispositif selon la revendication 12, **caractérisé en ce que** le bloc de tuyère (56) avec sa canalisation (58) d'alimentation en oxygène de coupe forme un ensemble amovible.

14. Dispositif selon l'une des revendications 5 à 13, **caractérisé en ce que** l'organe d'ébavurage (9) est une busette alimentée en oxygène, et montée de façon que son jet (9') soit dirigé vers le bas.

15. Dispositif selon la revendication 14, **caractérisé en ce que** la busette d'ébavurage (9) est alimentée par l'oxygène de coupe ou l'oxygène de chauffe alimentant l'organe de coupe (8), via une dérivation associée (61).

## Patentansprüche

1. Verfahren zum Brennschneiden von Strangguß-Knüppeln, **dadurch gekennzeichnet, daß** durch eine direkte Referenzierung an dem Knüppel ein Schneideelement (8) und ein Entgratelement (9) relativ zu dem zu schneidenden Knüppel (1) positioniert werden, dann das Schneideelement (8) und das Entgratelement (9) parallel zu den Seitenflächen (1.1, 1.2) des Knüppels derart abgesenkt werden, daß fortschreitend ein von oben nach unten gerichtetes Abschneiden durch einen horizontalen oder im wesentlichen horizontalen Angriff an einer Seitenfläche (1.1) des Knüppels und ein gleichzeitiges Entgraten des sich auf der anderen Seitenfläche (1.2) ausbildenden Schneidegrates (C) durch einen ständig nach unten gerichteten Angriff an dieser anderen Seitenfläche bewirkt werden.

2. Verfahren nach Anspruch 1, **dadurch gekennzeichnet, daß** die direkte Referenzierung an den beiden Seitenflächen (1.1, 1.2) des Knüppels durchgeführt wird, vorzugsweise mittels eines beweglichen Greifers (7).

3. Verfahren nach Anspruch 2, **dadurch gekennzeichnet, daß** die Referenzierung durch das schnelle Absenken eines beweglichen Greifers (7) erfolgt, woraufhin von oben nach unten das Abschneiden und das Entgraten durch das Absenken der entsprechenden Elemente (8, 9) mit programmierter Brennschneidegeschwindigkeit erfolgen.

4. Verfahren nach einem der Ansprüche 1 bis 3, **dadurch gekennzeichnet, daß** das Entgratelement (9) eine Brennerdüse ist, deren Strahl während des Absenkens des Schneide- und des Entgratelements (8, 9) ständig nach unten gerichtet bleibt.

5. Vorrichtung zum Durchführen des Brennschneideverfahrens nach einem der Ansprüche 1 bis 4, wobei die Vorrichtung der Art ist, die einen Schlitten (4) umfaßt, der auf dazugehörigen Schienen (3) horizontal verschiebbar ist und über den zu schneidenden Knüppel (1) hinausragt, **dadurch gekennzeichnet, daß** sie ferner umfaßt:
- einen Anbaurahmen (10, 20), der mit dem beweglichen Schlitten (4) verbunden ist und ein Vertikal-Betätigungsgerät (40) trägt,
- ein Gestell (45), das mittels eines Kardangelenks (44) an dem Vertikal-Betätigungsgerät (40) aufgehängt ist, wobei das Gestell einerseits einen beweglichen Greifer (7) und andererseits ein Schneideelement (8) und ein Entgratelement (9) trägt, die in einer vertikalen oder im wesentlichen vertikalen, von dem beweglichen Greifer (7) nach dem Festspannen des zu schneidenden Knüppels vorgegebenen Richtung beweglich sind, wobei das Schneideelement (8) in einer im wesentlichen horizontalen Richtung wirkt, die zur vorgenannten Verschiebungsrichtung im wesentlichen senkrecht ist, und das Entgratelement (9) nach unten wirkt.

6. Vorrichtung nach Anspruch 5, **dadurch gekennzeichnet, daß** das Vertikal-Betätigungsgerät (40) ein Zylinder oder ein Elektromotor ist, dessen Gehäuse schwimmend an dem Anbaurahmen (10, 20) gelagert ist, wobei es mindestens um eine horizontale Achse (42) schwenken kann, die parallel zur Verschiebungsrichtung des Schlittens ist.

7. Vorrichtung nach Anspruch 5, **dadurch gekennzeichnet, daß** der Anbaurahmen (10) mit einem Ende stirnseitig an dem Schlitten (4) gelagert ist, wobei er um eine horizontale Achse (100) schwenken kann, und mit seinem anderen Ende auf den gleichen Schienen wie der Schlitten aufliegt.

8. Vorrichtung nach Anspruch 5, **dadurch gekennzeichnet, daß** der Anbaurahmen (20) seitlich an den Laufachsen (22) des Schlittens (4) gelagert ist und sich stirnseitig durch einen auskragenden Abschnitt (23) fortsetzt, der das Vertikal-Betätigungsgerät (40) trägt.

9. Vorrichtung nach einem der Ansprüche 5 bis 8, **dadurch gekennzeichnet, daß** das Schneideelement (8) und das Entgratelement (9) mit einem zentralen Schieber (49) verbunden sind, der das Gestell (45) durchsetzt, und daß der bewegliche Greifer (7) an dem Gestell angelenkt ist.

10. Vorrichtung nach einem der Ansprüche 5 bis 8, **dadurch gekennzeichnet, daß** das Schneideelement (8) und das Entgratelement (9) mit dem Gestell (45) verbunden sind, und der bewegliche Greifer (7) an einem Hilfsrahmen (53) angelenkt ist, der an dem Gestell vertikal verschiebbar ist.

11. Vorrichtung nach Anspruch 10, **dadurch gekennzeichnet, daß** der Hilfsrahmen (53) über einen Zylinder zum Absenken des Greifers mit dem Gestell (45) verbunden ist.

12. Vorrichtung nach einem der Ansprüche 5 bis 11, **dadurch gekennzeichnet, daß** das Schneideelement (8) einen Horizontalbrenner (54) mit eingebautem Düsenblock (56) umfaßt.

13. Vorrichtung nach Anspruch 12, **dadurch gekennzeichnet, daß** der Düsenblock (56) mit seinem Rohrleitungssystem (58) zur Zufuhr von Schneidsauerstoff eine abnehmbare Einheit bildet.

14. Vorrichtung nach einem der Ansprüche 5 bis 13, **dadurch gekennzeichnet, daß** das Entgratelement (9) eine Düse ist, der Sauerstoff zugeführt wird und die derart gelagert ist, daß ihr Strahl (9') nach unten gerichtet ist.

15. Vorrichtung nach Anspruch 14, **dadurch gekennzeichnet, daß** der Entgratdüse (9) über eine dazugehörige Nebenleitung (61) der Schneidsauerstoff oder der Brennsauerstoff zugeführt wird, der das Schneideelement (8) speist.

## Claims

1. A method of oxygen cutting continuously cast billets, the method being **characterized in that** a cutting member (8) and a trimming member (9) are positioned relative to the billet to be cut (1) by taking a reference directly on the billet, and then the cutting member (8) and the trimming member (9) are lowered parallel to the side faces (1.1, 1.2) of the billet so as to perform cutting progressively downwards by attacking one of the side faces (1.1) of the billet horizontally or substantially horizontally, and while simultaneously trimming the cutting bead (C) that forms on the other side face (1.2) by attacking said other side face constantly in a downward direction.

2. A method according to claim 1, **characterized in that** the reference is taken directly on the two side faces (1.1, 1.2) of the billet, preferably by means of a moving clamp (7).

3. A method according to claim 2, **characterized in that** the reference is taken by lowering a moving clamp (7) quickly, after which cutting and trimming are performed downwards by lowering the corresponding members (8, 9) at a programmed oxygen cutting speed.

4. A method according to any one of claims 1 to 3, **characterized in that** the trimming member (9) is a blow torch nozzle whose jet remains continuously directed downwards while the cutting and trimming members (8, 9) are being lowered.

5. Apparatus for implementing the oxygen cutting method according to any one of claims 1 to 4, the apparatus being of the type comprising a carriage (4) that is horizontally displaceable on associated rails (3) overlying the billet (1) to be cut, the apparatus being **characterized in that** it further comprises:
- an auxiliary structure (10, 20) connected to the moving carriage (4) and supporting a vertical actuator (40); and
- a frame (45) suspended from the vertical actuator (40) via a universal joint (44), said frame supporting both a moving clamp (7) and a cutting member (8) and trimming member (9) that are movable in a vertical or substantially vertical direction as determined by the moving clamp (7) after it has been clamped the billet to be cut, said cutting member (8) acting in a substantially horizontal direction essentially perpendicular to the above-specified displacement direction, and said trimming member (9) acting downwards.

6. Apparatus according to claim 5, **characterized in that** the vertical actuator (40) is a piston-and-cylinder or an electric motor, with the body thereof being floatingly mounted on the auxiliary structure (10, 20), being capable at least of pivoting about a horizontal axis (42) parallel to the travel direction of the carriage.

7. Apparatus according to claim 5, **characterized in that** the auxiliary structure (10) is mounted via one end to the front of the carriage (4) so as to be pivotable about a horizontal axis (100), and rests via its other end on the same rails as the carriage.

8. Apparatus according to claim 5, **characterized in that** the auxiliary structure (20) is mounted laterally on the running axles (22) of the carriage (4), and is extended forwards by a cantilevered-out portion (23) which supports the vertical actuator (40).

9. Apparatus according to any one of claims 5 to 8, **characterized in that** the cutting member (8) and the trimming member (9) are connected to a central slide (49) passing through the frame (45), and the moving clamp (7) is hinged on said frame.

10. Apparatus according to any one of claims 5 to 8, **characterized in that** the cutting member (8) and the trimming member (9) are connected to the frame (45), and the moving clamp (7) is hinged to a secondary structure (53) capable of sliding vertically on said frame.

11. Apparatus according to claim 10, **characterized in that** the secondary structure (53) is connected to the frame (45) by an actuator for lowering the clamp.

12. Apparatus according to any one of claims 1 to 11, **characterized in that** the cutting member (8) comprises a horizontal burner (54) having an incorporated nozzle block (56).

13. Apparatus according to claim 12, **characterized in that** the nozzle block (56) with its cutting oxygen feed pipe (58) forms a removable assembly.

14. Apparatus according to any one of claims 5 to 13, **characterized in that** the trimming member (9) is a nozzle fed with oxygen, and mounted in such a manner that its jet (9') is directed downwards.

15. Apparatus according to claim 14, **characterized in that** the trimming nozzle (9) is fed with the cutting oxygen or the heating oxygen as fed to the cutting member (8) via an associated branch connection (61).
